# EUROPEAN PATENT SPECIFICATION

(11) **EP 2 796 815 B1**
(45) Date of publication and mention of the grant of the patent: **24.10.2018**
(21) Application number: 14164934.3
(22) Date of filing: 16.04.2014
(51) Int. Cl.: F25D 29/00

(54) **Refrigerator and operating method thereof**
Kühlschrank und Betriebsverfahren dafür
Réfrigérateur et son procédé de fonctionnement

(30) Priority: 23.04.2013 KR 20130044528
(43) Date of publication of application: 29.10.2014
(73) Proprietor: LG Electronics Inc., Seoul, 07336 (KR)
(72) Inventor: KIM, Kwanhyung, 137-893 Seoul (KR)
(74) Representative: Ter Meer Steinmeister & Partner

(56) References cited:
- JP-A- 2002 267 337
- JP-A- 2003 042 626
- US-A1- 2013 070 090

## Description

### CROSS-REFERENCE TO RELATED APPLICATION(S)

This application claims priority to Korean Application No. 10-2013-0044528, filed in Korea on April 23, 2013.

### BACKGROUND

### 1. Field

This relates to a refrigerator and an operating method thereof.

### 2. Background

Refrigerators may supply cool air generated by a refrigeration cycle into a refrigerating compartment and a freezing compartment to maintain various items at an appropriate temperature. Such a refrigerator may include a main body having a refrigerating compartment and a freezing compartment, and a door rotatably coupled to the main body to open or close the refrigerating compartment and the freezing compartment. Components of the refrigeration cycle including a compressor, an evaporator, and an expansion valve may be provided in the main body. Thus, cool air generated in the evaporator may be supplied to the refrigerating compartment and the freezing compartment to maintain items at a relatively low temperature.

The refrigerating compartment may be partitioned into a plurality of spaces by shelves to improve storage efficiency. For example, a storage chamber for storing meats, fish, and the like may be provided at an upper region of the refrigerating compartment, and a storage chamber for storing vegetables, fruits, and the like may be provided at a lower region of the refrigerating compartment. Directly opening the refrigerator door or the storage chamber to view the inside of the refrigerating compartment or the storage chamber to determine which goods are presently stored in the refrigerator may degrade energy efficiency and impact freshness.

JP2002-267337 A shows a food material control device and a method for controlling food materials in a refrigerator by photographing a food material picture image contained in a storage chamber of the refrigerator with a camera. A lower portion in a storage chamber of a refrigerator is constructed as a storage chamber having a drawing type door, and a camera is provided on a door of an upper storage chamber for photographing a food material picture image contained in a lower storage chamber from an upper portion.

JP2003-042626 A shows a refrigerator comprising a camera installed at the front part on the upper face of a refrigerator main body in a state that the camera projects forward, and rotated in a cross direction by a first motor and in a horizontal direction by a second motor. When a door of a chillroom is opened, the camera automatically turns its direction to a first shooting position for shooting the inside of the chillroom and shoots the inside of the chill-room. When one of drawers of a vegetable compartment, an ice compartment, a switching compartment, and a freezing compartment is pulled out, the camera turns its direction to a second shooting position for shooting the inside of the drawer and shoots the inside of the drawer pulled out. Also, storage compartments in the door of the chillroom and a user in front of the refrigerator main body can be shot by the camera.

### BRIEF DESCRIPTION OF THE DRAWINGS

The embodiments will be described in detail with reference to the following drawings in which like reference numerals refer to like elements wherein:
Fig. 1 is a perspective view of a refrigerator according to an embodiment as broadly described herein.
Fig. 2 is a front view of the refrigerator shown in Fig. 1, with a door opened, according to an embodiment as broadly described herein.
Fig. 3 is a side view of a refrigerator, according to an embodiment as broadly described herein.
Fig. 4 is a block diagram of the refrigerator shown in Fig. 1.
Fig. 5 is a flowchart of an operating method of a refrigerator, according to an embodiment as broadly described herein.
Fig. 6 is a flowchart of pattern recognition and tracing methods, according to an embodiment as broadly described herein.
Fig. 7 illustrates a pattern for detecting an insertion/withdrawal time point of a drawer of a refrigerator, according to an embodiment as broadly described herein.
FIG. 8 illustrates a shape of the pattern shown in Fig. 7.
Fig. 9 is a flowchart of a method of detecting a closing operation of a drawer of a refrigerator, according to an embodiment as broadly described herein.
Fig. 10 is a flowchart of an operation performed when completion of the closing operation of the drawer is detected, according to an embodiment as broadly described herein.
Fig. 11 is a flowchart of a method for controlling an image in a specific internal region of a refrigerator photographed at a specific point in time, according to an embodiment as broadly described herein.
Fig. 12 is a ladder diagram of an operating method of a refrigerator, according to another embodiment as broadly described herein.
Fig. 13 is a ladder diagram of an operating method of a refrigerator, according to another embodiment as broadly described herein.
Fig. 14 is a ladder diagram of an operating method of a refrigerator, according to another embodiment as broadly described herein.
Fig. 15 is a ladder diagram of an operating method of a refrigerator, according to another embodiment as broadly described herein.

### DETAILED DESCRIPTION

Hereinafter, exemplary embodiments will be described with reference to the accompanying drawings. In the drawings, the shapes and sizes of elements may be exaggerated for clarity. Also, terms used herein may be defined in consideration of functions according to embodiments, and thus the terms may be changed according to the intention or usage of a user or operator. Therefore, the terms may be defined based on overall content as broadly described herein.

For convenience of description, a bottom freezer type refrigerator is provided herein as an exemplary embodiment. However, embodiments are not limited thereto, and numerous other types of refrigerators having at least one partitioned storage space may be applicable to the embodiments.

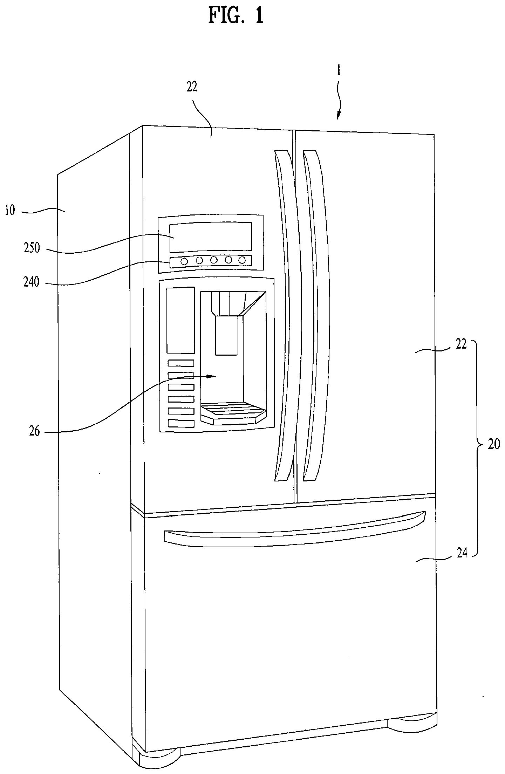

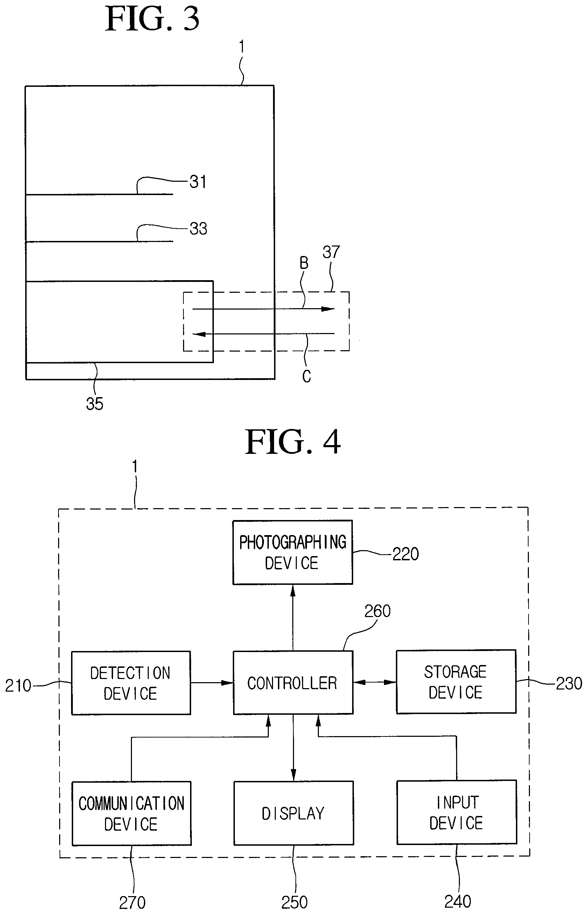

First, a structure of a refrigerator, according to an embodiment, will be described in detail with reference to Figs. 1 and 3.

Referring to Fig. 1, a refrigerator 1 according to an embodiment as broadly described herein may include a cabinet 10, a door 20, a dispenser 26, a user input device 240, and a display 250. The cabinet 10 may define a storage space in the refrigerator 1. The door 20 may be rotatably coupled to the cabinet 10, for example, at a side of the cabinet 10, to selectively open or close an opened front surface of the cabinet 10. The door 20 may be rotatably coupled to the cabinet 10 by a hinge. The door 20 may include a pair of refrigerating compartment doors 22 selectively opening or closing a refrigerating compartment provided at an upper portion of the cabinet 10 and a freezing compartment door 24 that is movably mounted, in a drawer type manner, to selectively open or close a freezing compartment provided at a lower portion of the cabinet 10.

The dispenser 26 may dispense, for example, ice and drinking water in response to user manipulation in a state in which the door 20 remains closed. The dispenser 26 may be disposed on a front surface of the door 20.

The display 250 may include a liquid crystal display (LCD). The display 250 may display information related to the refrigerator 1 or information related to goods stored in the refrigerator 1. The information related to the refrigerator 1 itself may include information related to an internal state or operation of the refrigerator 1 such as a temperature, humidity, and/or whether a refrigeration cycle operates. The information related to the goods stored in the refrigerator 1 may include information related to a state of the stored goods such as an image of the stored goods and whether the goods are damaged. The display 250 together with the dispenser 26 may be disposed a front surface of the door 20.

The input device 240 may receive a user input for adjusting a state or operation of the refrigerator 1 and a user input for displaying the information related to the goods stored in the refrigerator 1 on the display 250. The input device 240 may be provided on a side of the display 250 as a physical button key, or provided in an icon shape on the display 250 including a touch screen. However, embodiments are not limited thereto.

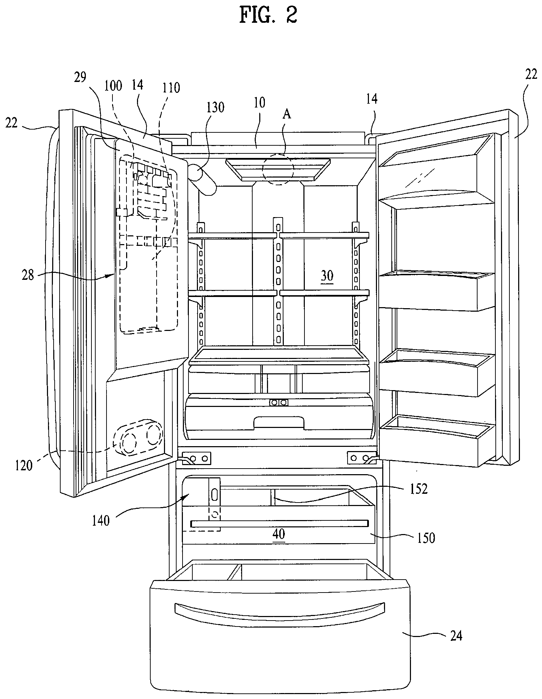

Fig. 2 is a front view of the refrigerator shown in FIG. 1, with the doors opened, according to an embodiment. Referring to Fig. 2, the inside of the cabinet 10 may be vertically partitioned by a horizontal barrier or an inner case defining an inner storage space to define the refrigerating compartment 30 and the freezing compartment 40 above and below the carrier.

A hinge 14 may rotatably couple the door 20 to the cabinet 10. In certain embodiments, a sensor detecting an opening/closing of the door 20 may be disposed inside the hinge 14 or on a side of the hinge 14. The door 20 may be rotatably coupled to the side of the cabinet 10 to selectively open or close an opened front surface of the cabinet 10.

A plurality receiving devices such as shelves, drawers, and baskets may be provided inside each of the refrigerating compartment 30 and the freezing compartment 40 and each of the refrigerating compartment door 22 and the freezing compartment door 24 to receive items therein.

A camera may be disposed at an upper central portion A of the cabinet 10 defining the refrigerating compartment 30 to capture an overall image of the refrigerating compartment 30. A camera may also be disposed at the freezing compartment 40, as well as the refrigerating compartment 30. Embodiments are not limited to certain installed positions of the camera, and at least one camera may be provided.

An ice making chamber 28 may be provided at a back surface of one of the doors 20, for example, the door 22. The ice making chamber 28 may be an insulated space that is independent from the inside of the refrigerating compartment 30 to accommodate a first ice maker 100 and an ice bank 110 to make and store ice.

The ice making chamber 28 may be defined by a door liner defining a back surface of the refrigerating compartment door 22. The inside of the ice making chamber 28 may be opened and closed by an ice making chamber door 29. The inside of the ice making chamber 28 may communicate with the dispenser 26 to dispense ice through the dispenser 26.

The first ice maker 100 may make ice using water supplied by a water supply passage. In detail, the first ice maker 100 may receive water for making ice, and may cool the water for a preset time or to a preset temperature, to make ice. Then, the first ice maker 100 may automatically separate the ice and transfer the separated ice to the ice bank 110.

The ice bank 110 may be disposed under the first ice maker 100 to store the ices transferred from the first ice maker 100. The ice bank 110 may communicate with the dispenser 26 to supply the stored ice to the dispenser 26 when the dispenser 26 is manipulated.

A water tank 120 may be disposed inside the refrigerating compartment door 22. The water tank 120 may temporarily store water to be supplied to the dispenser 26, and may be disposed in, for example, a lower portion of the refrigerator compartment door 22. Other locations, within the door 22 or the refrigerating compartment 30 may also be appropriate.

A water filter 130 may be disposed in the inside of the refrigerating compartment 30. In the embodiment shown in FIG. 2 the filter 140 is on a top surface of the refrigerating compartment 30, but other locations may also be appropriate. The water filter 130 may purify the water supplied to the dispenser 26 and may be replaceably disposed inside the refrigerating compartment 30.

A second ice maker 140 may be disposed in the freezing compartment 40, for example, on an upper edge of the freezing compartment 40. The second ice maker 140 may receive the water flowing along the water supply passage to make ice and be exposed to the inside of the freezing compartment 40.

Referring to Fig. 3, the cabinet 10 defining the refrigerating compartment 30 of the refrigerator 1 may include at least one shelf, and in this example, shelves 31 and 33 and drawer 37. The drawer 37 may be slidably coupled in a drawer chamber 35 having an opened front side so that the drawer 37 may be inserted into and withdrawn from the chamber 85. The user may open the door 22, and then withdraw the drawer 37 in a withdrawal direction B. Thereafter, the stored items may be arranged in a storage space defined inside the drawer 37. When the stored items are completely arranged, the user may close the drawer 37 in an insertion direction C.

To provide the user with information related to the goods finally stored in the drawer 37, the camera disposed at the upper end of the cabinet 10 may photograph a state in which the drawer 37 is maximally withdrawn from the drawer chamber 35. For example, the camera may photograph a plane of the inside of the drawer 37 at a point in time at which the closing of the drawer 37 begins, after the user has completely arranged the goods in the drawer 37. Since goods are not typically placed into the drawer 37 after the point in time at which the closing of the drawer 37 starts, an image photographed at the point in time at which the inserting of the drawer 37 starts may show essentially all of the goods finally stored in the drawer 37.

A functional structure of refrigerator, according to an embodiment, will be described in detail with reference to Fig. 4.

Referring to Fig. 4, the refrigerator 1 may include a detection device 210, a photographing device 220, a storage device 230, an input device 240, the display 250, a controller 260, and a communication device 270.

The detection device 210 may include, for example, an optical sensor, a mechanism sensor, a magnetic field sensor, a camera, and the like. However, embodiments are not limited thereto. The detection device 210 may detect an opening/closing operation of the door 20 or an insertion/withdrawal operation of the drawer 37 using signals acquired by various sensors and images photographed by the camera according to the control of the controller 260.

The various sensors may be disposed, for example, on a wall of the cabinet 10, a wall of the door 20, or the inside of the drawer 37. However, embodiments are not limited thereto. Also, the various sensors may be provided in plurality.

The optical sensor may be a sensor for detecting whether light exists and for detecting intensity of light. The optical sensor may be a proximity sensor for detecting whether an object to be detected approaches the sensor. Thus, the optical sensor may detect the opening/closing operation of the door 20 or the insertion/withdrawal operation of the drawer 37 using the existence/non-existence and intensity of the detected light.

The mechanism sensor may be a sensor for detecting external contact and may include a switch sensor. That is, the mechanism sensor may detect external contact to detect the opening/closing of the door 20 or the insertion/withdrawal operation of the drawer 37.

The magnetic field sensor may be a sensor for detecting an intensity and direction of magnetic fields or lines, and may include a hall sensor using a hall effect. The magnetic field sensor may detect a change in intensity or direction of magnetic fields to detect the opening/closing operation of the door 20 or the insertion/withdrawal operation of the drawer 37.

The camera may be disposed at a position at which an internal image of the refrigerator 1 to be provided to the user is capable of being photographed. The camera may be a single camera, or may be provided in plurality. For example, the camera may photograph a pattern for determining whether the internal image is acquired according to the opening/closing operation of the door 20 or the insertion/withdrawal operation of the drawer 37. That is, the detection device 210 may process the internal image of the refrigerator 1 acquired from the camera to detect the opening/closing of the door 20 according to the acquired degree of the pattern, and may detect the insertion/withdrawal of the drawer 37 according to whether the pattern moves.

Alternatively, the detection device 210 may include an encoder that is provided in the drawer 37. The drawer 37 may include a wheel or other such mechanism so that the drawer 37 may be withdrawn and inserted. The encoder may detect a contact point thereof due to the rotation of the wheel or a position of a groove through which light is transmitted according to the rotation of the wheel using the optical sensor to detect movement of the drawer 37.

The detection device 210 may also detect a moving direction of the drawer 37 to detect the insertion operation or the withdrawal operation of the drawer 37. Alternatively, the detection device 210 may detect a number of revolutions the wheel using the encoder to detect an inserted or withdrawn degree of the drawer 37.

Hereinafter, simply for ease of explanation, the door 20 or drawer 37 to be opened or closed may be commonly referred to as a door. Alternatively, the door 20 and the drawer 37 may be distinguished from each other.

When the photographing device 220 is provided inside the refrigerator 1, the photographing device 220 may photograph the inside of the refrigerator 1 under the control of the controller 260. The photographing device 220 may include, for example, a camera for photographing. The photographing device 220 may photograph substantially the entire inside or a portion of the inside of the refrigerator 1 according to a position of the camera.

The storage device 230 may store the image photographed by the photographing device 220 under the control of the controller 260. The storage device 230 may provide the stored image to the controller 260 according to the control of the controller 260.

The display 250 may include a display part such as an LCD panel for displaying an image or a user interface (Ul), based on the control of the controller 260. The display 250 may be disposed on the front surface of the refrigerator 1, e.g., the front surface of the door 20, or other location as appropriate.

The controller 260 may control individual operations or an overall mutual operation of the detection device 210, the photographing device 220, the storage device 230, the input device 240, the display device 250, and the communication device 270 of the refrigerator 1.

The controller 260 may determine a specific point in time that is just before the door is closed, using the opened or closed state or the opened degree of the door detected by the detection device 210. For example, the controller 260 may determine a specific point in time that is just before the door is closed using the point in time at which initiation the insertion/withdrawal operation of the drawer 37 is detected by the detection device 210.

When the specific point in time is determined, the controller 260 may acquire the internal image of the refrigerator 1 at the specific point in time at which the photographing device 220 photographs the internal image. The controller 260 may control the storage device 230 so that the acquired internal image of the refrigerator 1 is stored in the storage device 230.

The controller 260 may also control the display 250 to display the photographed or stored image on the display 250 in accordance with a pre-stored or user selection.

The controller 260 may control whether the communication device 270 externally transmits the image to the outside or receives the information from the outside.

The communication device 270 may transmit the image photographed by the photographing device 220 or the image stored in the storage device 230 to the outside or may receive information from the outside according to the control of the controller 260.

The communication device 270 may transmit the internal image of the refrigerator 1 at a preset period, or in response to an input by the user. Alternatively, the communication device 270 may transmit the internal image of the refrigerator 1 in response to an external request.

The communication device 270 may receive information related to a list of goods to be replaced or cooking recipes using the goods stored in the refrigerator 1 in response to the internal image of the refrigerator 1 from the outside. However, embodiments are not limited thereto.

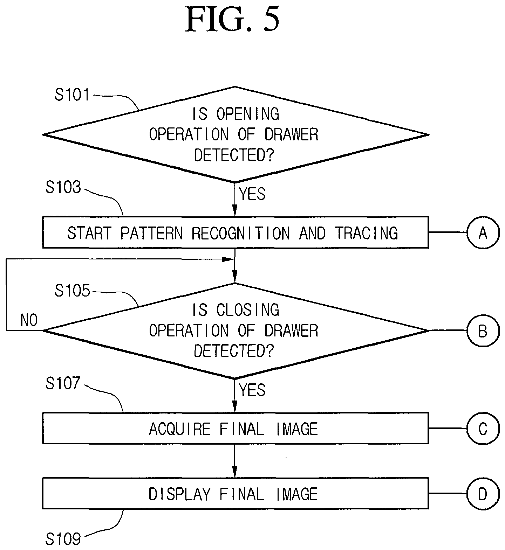

Next, an operating method of the refrigerator, according to an embodiment, will be described with reference to Figs. 5 to 11.

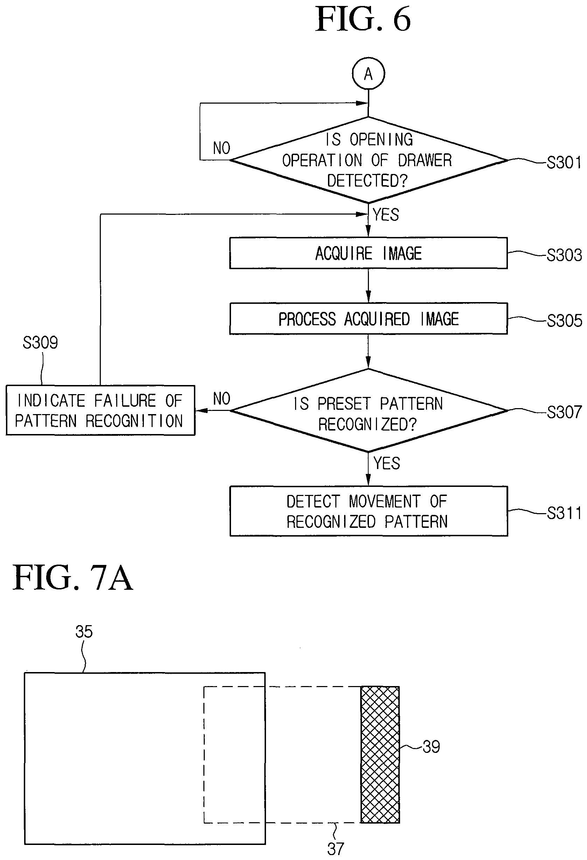

Referring to Fig. 5, when the opening operation of the drawer 37 is detected by the detection device 210 in operation S101, the controller 260 starts a pattern recognition operation and pattern tracing operation in operation S103. Hereinafter, the operations S101 and S103 will be described in detail with reference to Fig. 6.

Referring to Fig. 6, the detection device 210 detects whether the drawer opening operation starts in operation S301. When the opening of the drawer 37 is detected by the detection device 210, the controller 260 controls the photographing device 220 to acquire the internal image of the drawer 37 in operation S303. Then, in operation S305, the controller 260 processes the image acquired by the photographing device 220, to determine, in operation S307, whether a preset pattern is recognized from the acquired image.

To determine whether the preset pattern has been recognized, the controller 260 recognizes a pattern, e.g., a repeated pattern, from the acquired image to compare whether the recognized pattern is the same as the preset pattern. For example, when the pattern from the acquired image is the same as the preset pattern, it may be determined that the preset pattern has been recognized. However, embodiments are not limited thereto. The preset pattern may be preset by a business operator or user and previously stored in the storage device 230.

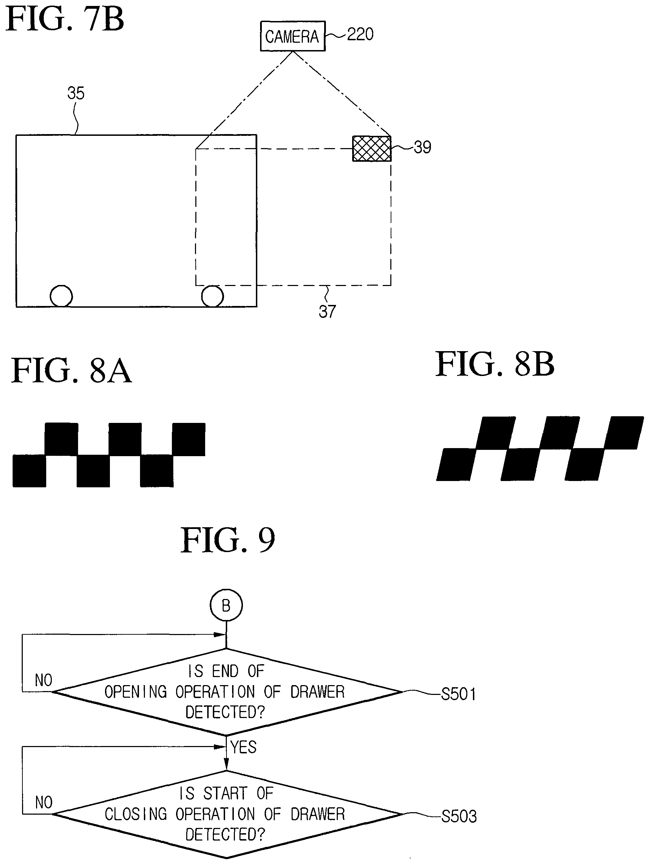

The pattern may be formed in a region in which the pattern is capable of being acquired in image form by the photographing device 220. Hereinafter, a pattern that is recognizable and traceable by the controller 260 will be described in detail with reference to Figs. 7A-7B and 8A-8B.

Referring to Fig. 7A, which is a side view of the drawer 37 and chamber 35 a pattern 39 may be disposed in a region in which an image is capable of being acquired by a camera 220 at a point in time at which the opening of the drawer 37 starts. For example, when the camera 220 is disposed at an upper end of the refrigerator 1 to capture a plan view of the drawer 37, the pattern 39 may be disposed on a front upper end of the drawer 37. In certain embodiments, the camera 220 may be disposed so that its view is capable of capturing an image at a completely closed state of the drawer 37 to a completely opened state of the drawer 37.

When the pattern 39 is disposed on the upper end of the drawer 37, it may be anticipated that an obstacle does not exist at the upper end of the drawer 37 at a time at which the drawer 37 is closed, after the goods within the drawer 37 are completely arranged. However, embodiments are not limited thereto.

Referring to Fig. 7B, which is a top view of the drawer 37 and chamber 35, when the drawer chamber 35 and the drawer 37 are viewed through the camera 220, the inside of the drawer 37 including the pattern 39 may be photographed in an entire region from the state in which the opening of the drawer 37 starts to the state in which the drawer 37 is completely opened.

The pattern 39 may be formed by, for example, alternating shapes and/or colors. For example, referring to Fig. 8A, a plurality of white rectangular shapes and black rectangular shapes may be alternately and repeatedly arranged in a band shape to form the pattern 39. Referring to Fig. 8B, a plurality of white inclined rectangular shapes and black inclined rectangular shapes may be alternately and repeatedly arranged in a band shape to form the pattern 39.

As described above, the pattern 39 having the repeated shape may have an advantage in that the pattern 39 is capable of being recognized and traced by the controller 260 even though a portion of the pattern 39 may be covered from the view of the camera 220. However, the present disclosure is not limited to the repeated shape of the pattern 39, and the pattern may have a plurality of colors, in addition to black and white. As described above, the pattern 39 may include an arrangement of elements sufficient to recognize whether the movable drawer 37 of the refrigerator 1 moves.

Referring again to Fig. 6, when the preset pattern is recognized, the controller 260 detects the movement of the recognized pattern in operation S311. The controller 260 may continuously or periodically process the image acquired by the photographing device 220 to determine whether the recognized pattern 39 moves or is stopped in operation S311. For example, the controller 260 may determine whether the pattern 39 moves or is stopped when the opening operation of the drawer 37 is continuous or completed, or the closing operation of the drawer 37 starts or is continuous or completed.

In operation S309, when the preset pattern is not recognized, the controller 260 may indicate failure of the pattern recognition to the user.

For example, when an obstacle obscures the pattern exists, the camera 220 may not acquire an image including the pattern, or the controller 260 may not recognize the pattern from the acquired image. In this case, the controller 260 may generate an indicator of failed pattern recognition, and information for successful pattern recognition such as removal of the obstacle, to the user through the display 250 in operation S309.

Then, when the pattern recognition is failed, the controller 260 may process a newly acquired and repeatedly perform the process of recognizing the preset pattern.

Referring again to Fig. 5, if the closing operation of the drawer is detected in operation S105 after the pattern recognition, the controller 260 acquires a final internal image of the drawer through the photographing device 220 in operation S107. The final internal image of the drawer 37 may be an internal image of the drawer 37 just before the closing operation of the drawer 37 is detected or an internal image of the drawer 37 just after the closing operation of the drawer 37 is detected, but embodiments are not limited thereto.

Detection of the closing operation of the drawer will be described with reference to Fig. 9.

Referring to Fig. 9, the controller 260 determines whether an end of an opening operation of the drawer 37 is detected in operation S501. For example, the controller 260 may recognize the pattern 39 from the previously acquired internal image of the drawer 37 and trace the movement of the pattern 39. Then, when the movement of the pattern 39 is stopped, the controller 260 may detect that the opening operation of the drawer 37 is complete. Also, the controller 260 may determine that the opening operation of the drawer 37 is complete when the end of the opening operation is detected by the detection device 210, but embodiments are not limited thereto.

Then, in operation S503, the controller 260 determines whether a start of the closing operation of the drawer 37 is detected. For example, the controller 260 may detect that the closing operation of the drawer 37 has started when the movement of the pattern 39 is stopped and then moves again in a reverse direction. Also, the controller 260 may know that the closing operation of the drawer 37 has started based on detection by the detection device 210, embodiments are not limited thereto.

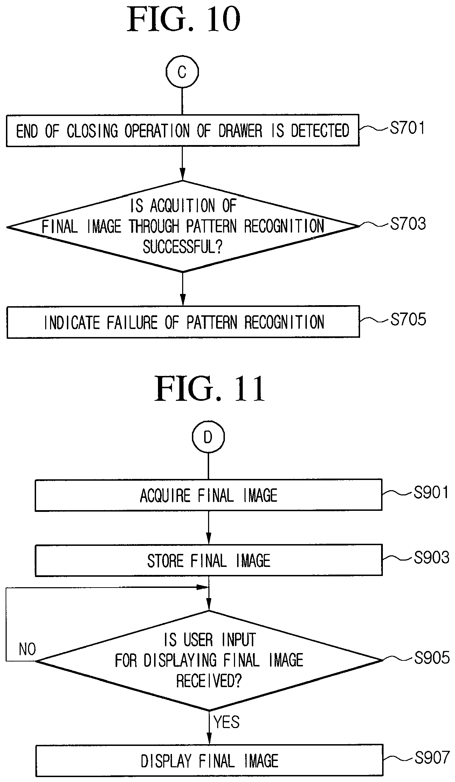

An operation of the controller 260 that detects a closing operation of a drawer according to another embodiment will be described with reference to Fig. 10.

When the end of the closing operation of the drawer is detected in operation S701, the controller 260 determines whether a final image has been successfully acquired through the pattern recognition in operation S703.

The control unit 260 may detect that the closing operation of the drawer 37 has been completed through the processing of the image and the detection of the detection device 210.

In operation S705, when the acquisition of the final image is failed, such as when the pattern is not normally recognized due to an obstacle, the controller 260 generates an indicator of the failure of the pattern recognition to the user.

The controller 260 may indicate the failure of the pattern recognition to the user through the display 250. This may guide the user to remove the obstacle and induce the insertion/withdrawal of the drawer so that the pattern may be normally recognized and the final image may be acquired.

Referring again to Fig. 5, the controller 260 displays the final image on the display 250 in operation S109. Next, a final image control according to another embodiment will be described with reference to the flowchart shown in Fig. 11.

Referring to Fig. 11, the controller 260 acquires a final image in operation S901 and then stores the acquired final image in the storage device 230 in operation S903.

Then, in operation S905, the controller 260 determines whether a user input for displaying the final image is received.

For example, when the final image is acquired, the controller 260 may control the display 250 to display the input device 240 having, for example, a keyboard or an icon shape together with the information that the final image has been successfully acquired when the display 250 includes the touch screen, and may then determine whether an input for receiving a corresponding icon has been received. The input device 240 may include a physical key as described above in addition to the icon formed on the touch screen. However, embodiments are not limited thereto.

Then, in operation S907, the controller 260 displays the final image when the user input for displaying the final image is received. The controller 260 may display the final image using the display 250.

According to the invention, the refrigerator 1 recognizes a pattern previously formed on the drawer to detect the movement of the drawer. The refrigerator 1 may acquire a final state of goods stored in the drawer in the form of an image using the camera disposed in the refrigerator. In certain embodiments, the refrigerator 1 may determine an optimum point in time at which the final storage state is capable of being acquired using the pattern formed on the drawer.

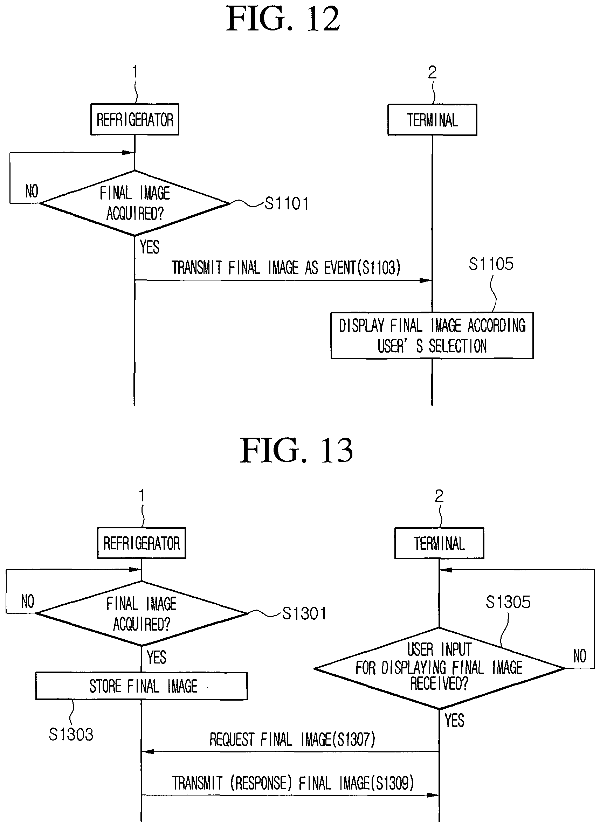

Hereinafter, various embodiments in which the latest internal image of the refrigerator that may be acquired by the above-described various methods is transmitted to a personal mobile terminal or a business operator's server and then utilized will be described with reference to Figs. 12 to 15.

Fig. 12 is a ladder diagram of an operating method of a refrigerator, according to another embodiment as broadly described herein.

Referring to Fig. 12, when it is determined that the final image of a specific internal region of the refrigerator 1 has been acquired through the process described with reference to Fig. 5 in operation S1101, the controller 260 transmits the final image to a terminal 2, as an event, in operation S1103. The terminal 2 may include, for example, a desktop or laptop computer, a mobile phone, a personal digital assistant (PDA), a tablet PC, and the like, but embodiments are not limited thereto. In certain embodiments, the controller 260 may also transmit various information related to the final image as well as the final internal image of the refrigerator 1 to the terminal 2.

In certain embodiments, the controller 260 may transmit the final image to the terminal 2 immediately when the final image is acquired. Alternatively, after the acquired final image is stored in the storage device 230, the controller 260 may transmit the image, stored as an event, to the terminal 2 at a preset period. However, embodiments are not limited thereto.

In operation S1105, the terminal 2 displays the received final image in response to a user's selection. For example, the terminal 2 may execute an application for receiving and displaying the internal image of the refrigerator in response to the user's selection, or may perform a multimedia service to display the internal image of the refrigerator.

According to the current embodiment, since the internal image may be confirmed using the mobile terminal, the current internal situation of the refrigerator may be remotely viewed even though the user does not have direct physical access to the refrigerator.

Fig. 13 is a ladder diagram of an operating method of a refrigerator, according to another embodiment as broadly described herein.

Referring to Fig. 13, when it is determined that a final image of a specific internal region of a refrigerator 1 has been acquired in operation S1301 as described above, the controller 260 controls the storage device 230 to store the acquired final image in operation S1303.

Then, when a user input requesting that the current internal image of the refrigerator 1, i.e., the final image of the specific region of the refrigerator 1 is received from a terminal 2 in operation S1305, the terminal 2 transmits a final image request command to the refrigerator 1 in operation S1307. Then, in operation S1309, the controller 260 controls the communication device 270 so that the latest photographed and stored internal image of the images stored in the storage device 230 is transmitted to the terminal 2 in response to the final image request command.

According to the current embodiment, since the communication between the mobile terminal 2 and the refrigerator 1 is performed only in response to the user's request, the refrigerator 1 may more efficiently or economically operate. Hereinafter, although only the transmission of the image in response to the request is described, the image may be transmitted as the event as described with reference to Fig. 6, but embodiments are not limited thereto.

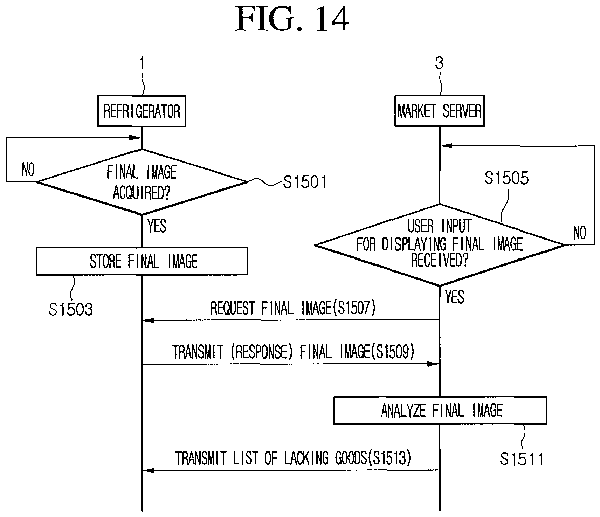

Fig. 14 is a ladder diagram of an operating method of a refrigerator, according to another embodiment as broadly described herein.

Referring to Fig. 14, when it is determined that a final image of a refrigerator 1 of a specific internal region of refrigerator 1 has been acquired in operation S1501 as described above, the controller 260 controls the storage device 230 to store the acquired final image in operation S1503.

Then, when a user input is received from a business operator's server such as a market server 3 in operation S1505 requesting that the current internal image be displayed, the market server 3 transmits a final image request command to the refrigerator 1 in operation S1507. In certain embodiments, the market server 3 may transmit the final image request command to the refrigerator 1 at a preset period without the user input.

Also, in operation S1509, the controller 260 controls the communication device 270 so that the latest photographed and stored internal image of the images stored in the storage device 230 is transmitted to the market server 3 in response to the image request command.

In operation S1511, the market server 3 receiving the final internal image of the refrigerator 1 analyzes the final image. The market server 3 may analyze the final image to check, or inventory, goods that are currently stored in the refrigerator 1 (based on analysis of the final image) and goods that are not currently stored in the refrigerator 1. Then, the market server 3 may extract information needed to provide an analysis of the goods that are currently stored the corresponding refrigerator 1 compared to goods that were previously stored in the corresponding refrigerator 1 (and have since been consumed and may require replenishment). In operation S1513, the market server 3 transmits a list of lacking goods that is extracted though the analysis of the final image.

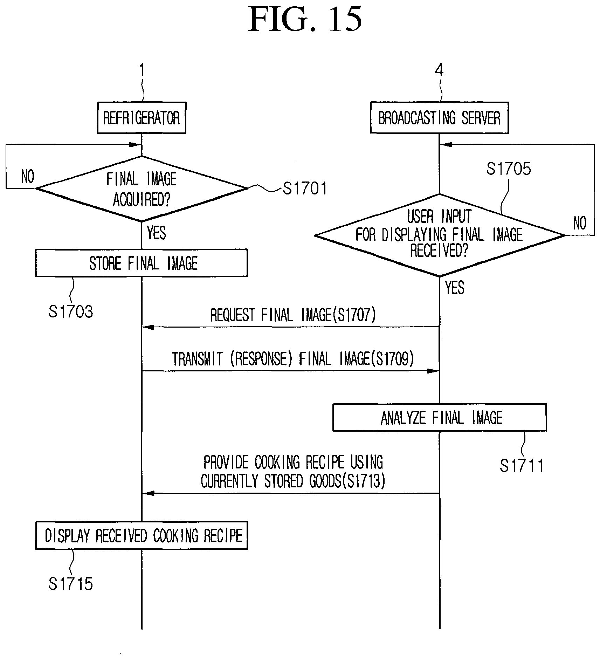

Fig. 15 is a ladder diagram of an operating method of a refrigerator, according to another embodiment as broadly described herein.

Referring to Fig. 15, when it is determined that a final image of a specific internal region of a refrigerator has been acquired in operation S1701 as described above, the controller 260 controls the storage device 230 to store the acquired final image in operation S1703.

Then, when a user input is received from a business operator's server such as a broadcasting server 4 in operation S1705 requesting that the internal image be displayed, the broadcasting server 4 transmits a final image request command to the refrigerator 1 in operation S1707. In certain embodiments, the broadcasting server 4 may transmit the final image request command to the refrigerator 1 at a preset period without the user input.

Also, in operation S1709, the controller 260 controls the communication device 270 so that the latest photographed and stored final internal image of the images stored in the storage device 230 is transmitted to the broadcasting server 4 in response to the final image request command.

In operation S1711, the broadcasting server 4 receiving the final internal image analyzes the final image. The broadcasting server 4 may analyze the final image to check, or inventory, goods currently stored in the refrigerator 1. Then, the broadcasting server 4 extracts information that may be required for a particular service such as cooking recipes using the goods currently stored in the refrigerator 1.

In operation S1713, the broadcasting server 4 transmits information with respect to the cooking recipe using the goods currently stored in the refrigerator 1 through the analysis of the final image.

In operation S1715, the controller 260 displays the information, which is received from the broadcasting server 4, of the cooking recipe(s) using the currently stored goods on the display 250.

According to the current embodiment, the corresponding business operator may acquire an accurate understanding the internal situation of the refrigerator, including goods on hand/currently stored therein, that is located at a home or enterprise, to provide a particular service related to the refrigerator suitable for the corresponding home or enterprise. This may include, for example, recipe generation using goods currently stored, generating shopping lists, and other such services.

According to the embodiment, the latest image of the goods stored in the specific internal region of the refrigerator, such as the storage chamber, may be acquired to provide the current internal situation of the refrigerator to the user.

According to another embodiment, the user may remotely view and understand the current internal situation of the refrigerator, including goods currently stored therein, and receive the information related to goods required by the user from the external business operator.

Embodiments provide a refrigerator and an operating method thereof in which an insertion/withdrawal point in time of a storage chamber that is movably mounted in the refrigerator may be detected to acquire an image of goods stored in a corresponding storage chamber, thereby providing a current status of the corresponding storage chamber to a user.

Embodiments also provide a refrigerator and an operating method thereof in which a user may remotely acquire a current internal state of the refrigerator to transmit information related to the internal state of the refrigerator to an external business operator, and receive information related to items required by the user from the external business operator.

In one embodiment, an operating method of a refrigerator including a drawer and a camera may include recognizing a closing operation of the drawer, acquiring a final internal image of the drawer using the camera in a moment of time at which the closing operation of the drawer starts, and displaying the final image.

In another embodiment, a refrigerator may include an insertable and withdrawable drawer, a detection unit detecting a closing operation or an opening operation of the drawer, a photographing unit acquiring an internal image of the drawer, and a control unit controlling the photographing unit to acquire an internal final image of the drawer immediately at a time point at which the closing operation of the drawer starts when the closing operation of the drawer is recognized.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An operating method of a refrigerator (1) comprising a drawer (37) and a camera (220), the method comprising:
detecting (S105) a closing operation of the drawer (37) in which the drawer (37) is moved from an open state to a closed state;
acquiring (S107) a final image of an interior of the drawer (37) using the camera (220) at a point in time at which the closing operation of the drawer (37) is initiated; and
displaying (S109) the final image;
**characterized by**
recognizing (S307) on an acquired image a pattern previously formed on the drawer (37) for detecting (S105) a movement of the drawer (37).

2. The method of claim 1, wherein detecting a closing operation of the drawer (37) comprises:
detecting (S301) a start of an opening operation of the drawer (37);
acquiring (S303) the image of the interior of the drawer (37) in the open state using the camera (220);
processing (S305) the acquired image; and
in response to recognizing (S307) the preset pattern in the acquired image as a result of processing the acquired image, tracing (S311) a movement of the recognized pattern.

3. The method of claim 2, wherein tracing a movement of the recognized pattern comprises:
detecting completion (S501) of the opening operation of the drawer (37) using the recognized pattern; and
detecting (S503) initiation of the closing operation of the drawer (37) using the pattern.

4. The method of claim 2 or 3, further comprising displaying (S309) an indication of a pattern recognition failure when the preset pattern is not recognized in the acquired image as a result of processing.

5. The method of any one of claims 2 to 4, further comprising:
determining (S703) whether the final image was successfully acquired based on the pattern recognition when completion of the closing operation is detected; and
displaying (S705) an indication of a pattern recognition failure when it is determined that the final image was not successfully acquired and the pattern recognition has failed.

6. The method of any one of claims 2 to 5, wherein the preset pattern comprises one shape repeated a plurality of times, in at least two different colors.

7. The method of any one of claims 1 to 6, further comprising storing (S903) the acquired final image.

8. The method of claim 7, further comprising:
receiving (S905) a command for displaying the final image; and
retrieving the stored final image and then displaying (S907) the retrieved final image.

9. The method of any one of claims 1 to 8, further comprising:
receiving (S1105, S1305, S1307) an image request command from an external terminal (2); and
transmitting (S1103, S1309) the final image to the external terminal (2) in response to the image request command (S1105, S1305, S1307).

10. The method of any one of claims 1 to 8, further comprising:
receiving (S1507, S1707) an image request command from an external server (3);
transmitting (S1509, S1709) the final image to the external server (3) in response to the image request command; and
receiving (S1513, S1713) at least one related service from the external server (3) based on an analysis (S1511, S1711) of the final image by the external server (3).

11. The method of claim 10, wherein the at least one related service (S1513, S1713) comprises at least one of a list of replenishment items to be stored in the refrigerator (1) or information related to cooking recipes using items currently stored in the refrigerator (1).

12. A refrigerator (1), comprising:
a main body (10);
a drawer (37) movably coupled to the main body (10) so as to be inserted into and withdrawn from the main body (10);
a photographing device (220) configured to acquire an internal image of the drawer (37); and
a controller (260) configured to control the photographing device (220) to acquire a final image of the drawer (37) coincident with a point in time at which the closing operation of the drawer (37) is initiated when the closing operation of the drawer (37) is detected,
**characterized in that** the controller (260) is configured to recognize on an acquired image a pattern previously formed on the drawer (37) for detecting a movement of the drawer (37).

13. The refrigerator of claim 12, wherein, , the controller (260) is configured to acquire the internal image of the drawer (37) by using the photographing device (220), to process the acquired image, and to recognize the preset pattern from the acquired image so as to trace a movement of the recognized pattern.

14. The refrigerator of claim 13, wherein the controller (260) is configured to detect initiation and completion of the closing operation of the drawer (37) using the recognized pattern.

15. The refrigerator of claim 13 or 14, wherein the preset pattern comprises one shape repeated a plurality of times, in at least two different colors.

16. The refrigerator of any one of the claims 12 to 15, further comprising a storage device (230) configured to store the final image.

17. The refrigerator of any one of the claims 12 to 16, further comprising a display (250) configured to display the final image when the pattern recognition is successful, and to display an indicator of pattern recognition failure when the pattern recognition is not successful.

18. The refrigerator of claim 17, further comprising an input device (240) configured to receive an external input for displaying the final image, wherein the controller (260) is configured to control the display (250) to display the final image when the external input for displaying the final image is received at the input device (240).

19. The refrigerator of any one of the claims 12 to 18, further comprising a communication device (270) configured to receive an image request from an external terminal (2) or server (3), and to transmit the final image to the external terminal (2) or server (3) in response to the received request, the communication device (270) receiving service related information from the external server (3) based on analysis of the transmitted final image,
wherein the controller (260) is configured to control the communication device (270) to transmit the final image to the external terminal (2) or server (3) in response to the image request from the external terminal (2) or server (3).

## Patentansprüche

1. Betriebsverfahren eines Kühlschranks (1), umfassend eine Lade (37) und eine Kamera (220), wobei das Verfahren umfasst:
Detektieren (S105) eines Schließvorgangs der Lade (37), bei dem die Lade (37) aus einem offenen Zustand in einen geschlossenen Zustand bewegt wird;
Erfassen (S107) eines Endbilds eines Inneren der Lade (37) unter Verwendung der Kamera (220) zu einem Zeitpunkt, zu dem der Schließvorgang der Lade (37) initiiert wird; und
Anzeigen (S109) des Endbilds;
**gekennzeichnet durch**
Erkennen (S307), aus einem erfassten Bild, eines Musters, das zuvor auf der Lade (37) gebildet wurde, zum Detektieren (S105) einer Bewegung der Lade (37).

2. Verfahren nach Anspruch 1, wobei das Detektieren eines Schließvorgangs der Lade (37) umfasst:
Detektieren (S301) eines Starts eines Öffnungsvorgangs der Lade (37);
Erfassen (S303) des Bilds des Inneren der Lade (37) in dem offenen Zustand unter Verwendung der Kamera (220);
Verarbeiten (S305) des erfassten Bilds; und
ansprechend auf das Erkennen (S307) voreingestellten Musters in dem erfassten Bild als Ergebnis der Verarbeitung des erfassten Bilds, Verfolgen (S311) einer Bewegung des erkannten Musters.

3. Verfahren nach Anspruch 2, wobei das Verfolgen einer Bewegung des erkannten Musters umfasst:
Detektieren der Vollendung (S501) des Öffnungsvorgangs der Lade (37) unter Verwendung des erkannten Musters; und
Detektieren (S503) der Initiierung des Schließvorgangs der Lade (37) unter Verwendung des Musters.

4. Verfahren nach Anspruch 2 oder 3, ferner umfassend ein Anzeigen (S309) einer Anzeige eines Mustererkennungsfehlschlags, wenn das voreingestellte Muster in dem erfassten Bild als Ergebnis der Verarbeitung nicht erkannt wird.

5. Verfahren nach einem der Ansprüche 2 bis 4, ferner umfassend:
Bestimmen (S703), ob das Endbild auf der Basis der Mustererkennung erfolgreich erfasst wurde, wenn die Vollendung des Schließvorgangs detektiert wird; und
Anzeigen (S705) einer Anzeige eines Mustererkennungsfehlschlags, wenn bestimmt wird, dass das Endbild nicht erfolgreich erfasst wurde, und die Mustererkennung fehlgeschlagen ist.

6. Verfahren nach einem der Ansprüche 2 bis 5, wobei das voreingestellte Muster eine Form, die eine Vielzahl von Malen wiederholt wird, in mindestens zwei verschiedenen Farben umfasst.

7. Verfahren nach einem der Ansprüche 1 bis 6, ferner umfassend ein Speichern (S903) des erfassten Endbilds.

8. Verfahren nach Anspruch 7, ferner umfassend:
Empfangen (S905) eines Befehls zum Anzeigen des Endbilds; und
Abrufen des gespeicherten Endbilds und dann Anzeigen (S907) des abgerufenen Endbilds.

9. Verfahren nach einem der Ansprüche 1 bis 8, ferner umfassend:
Empfangen (S1105, S1305, S1307) eines Bildanforderungsbefehls von einem externen Terminal (2); und
Übertragen (S1103, S1309) des Endbilds an den externen Terminal (2) ansprechend auf den Bildanforderungsbefehl (S1105, S1305, S1307).

10. Verfahren nach einem der Ansprüche 1 bis 8, ferner umfassend:
Empfangen (S1507, S1707) eines Bildanforderungsbefehls von einem externen Server (3);
Übertragen (S1509, S1709) des Endbilds an den externen Server (3) ansprechend auf den Bildanforderungsbefehl; und
Empfangen (S1513, S1713) mindestens eines verwandten Dienstes vom externen Server (3) auf der Basis einer Analyse (S1511, S1711) des Endbilds durch den externen Server (3).

11. Verfahren nach Anspruch 10, wobei der mindestens eine verwandte Dienst (S1513, S1713) mindestens eines von einer Liste von Bestandsauffüllungsartikeln, die im Kühlschrank (1) zu lagern sind, oder Informationen in Bezug auf Kochrezepte unter Verwendung von Artikeln, die aktuell im Kühlschrank (1) gelagert sind, umfasst.

12. Kühlschrank (1), umfassend:
einen Hauptkörper (10);
eine Lade (37), die mit dem Hauptkörper (10) bewegbar gekoppelt ist, um so in den Hauptkörper (10) eingesetzt und aus diesem entnommen zu werden;
eine Fotografiervorrichtung (220), die ausgelegt ist, ein internes Bild der Lade (37) zu erfassen; und
eine Steuereinheit (260), die ausgelegt ist, die Fotografiervorrichtung (220) zu steuern, um ein Endbild der Lade (37) koinzident mit einem Zeitpunkt zu erfassen, zu dem der Schließvorgang der Lade (37) initiiert wird, wenn der Schließvorgang der Lade (37) detektiert wird;
**dadurch gekennzeichnet, dass** die Steuereinheit (260) ausgelegt ist, an einem erfassten Bild ein zuvor von der Lade (37) gebildetes Muster zu erkennen, um eine Bewegung der Lade (37) zu detektieren.

13. Kühlschrank nach Anspruch 12, wobei die Steuereinheit (260) ausgelegt ist, das interne Bild der Lade (37) unter Verwendung der Fotografiervorrichtung (220) zu erfassen, um das erfasste Bild zu verarbeiten, und das voreingestellte Muster aus dem erfassten Bild zu erkennen, um so eine Bewegung des erkannten Musters zu verfolgen.

14. Kühlschrank nach Anspruch 13, wobei die Steuereinheit (260) ausgelegt ist, die Initiierung und Vollendung des Schließvorgangs der Lade (37) unter Verwendung des erkannten Musters zu detektieren.

15. Kühlschrank nach Anspruch 13 oder 14, wobei das voreingestellte Muster eine Form, die eine Vielzahl von Malen wiederholt wird, in mindestens zwei verschiedenen Farben umfasst.

16. Kühlschrank nach einem der Ansprüche 12 bis 15, ferner umfassend eine Speichervorrichtung (230), die ausgelegt ist, das Endbild zu speichern.

17. Kühlschrank nach einem der Ansprüche 12 bis 16, ferner umfassend eine Anzeige (250), die ausgelegt ist, das Endbild anzuzeigen, wenn die Mustererkennung erfolgreich ist, und einen Indikator eines Mustererkennungsfehlschlags anzuzeigen, wenn die Musterkennung nicht erfolgreich ist.

18. Kühlschrank nach Anspruch 17, ferner umfassend eine Eingabevorrichtung (240), die ausgelegt ist, eine externen Eingabe zum Anzeigen des Endbilds zu empfangen, wobei die Steuereinheit (260) ausgelegt ist, die Anzeige (250) zu steuern, um das Endbild anzuzeigen, wenn die externe Eingabe zum Anzeigen des Endbilds an der Eingabevorrichtung (240) empfangen wird.

19. Kühlschrank nach einem der Ansprüche 12 bis 18, ferner umfassend eine Kommunikationsvorrichtung (270), die ausgelegt ist, eine Bildanforderung von einem externen Terminal (2) oder Server (3) zu empfangen, und das Endbild zum externen Terminal (2) oder Server (3) ansprechend auf die empfangene Anforderung zu übertragen, wobei die Kommunikationsvorrichtung (270) dienstbezogene Informationen vom externen Server (3) auf der Basis der Analyse des übertragenen Endbilds empfängt,
wobei die Steuereinheit (260) ausgelegt ist, die Kommunikationsvorrichtung (270) zu steuern, um das Endbild zum externen Terminal (2) oder Server (3) ansprechend auf die Bildanforderung vom externen Terminal (2) oder Server (3) zu übertragen.

## Revendications

1. Procédé pour le fonctionnement d'un réfrigérateur (1) comprenant un tiroir (37) et une caméra (220), le procédé comprenant les étapes consistant à :
détecter (S105) une opération de fermeture du tiroir (37) dans laquelle le tiroir (37) est déplacé depuis un état ouvert jusqu'à un état fermé ;
acquérir (S107) une image finale d'un intérieur du tiroir (37) en utilisant la caméra (220) à un instant auquel l'opération de fermeture du tiroir (37) est commencée ; et
afficher (S109) l'image finale ;
**caractérisé par**
l'étape consistant à reconnaître (S307) sur une image acquise un motif précédemment formé sur le tiroir (37) pour détecter (S105) un déplacement du tiroir (37).

2. Procédé selon la revendication 1, dans lequel la détection d'une opération de fermeture du tiroir (37) comprend les étapes consistant à :
détecter (S301) un démarrage d'une opération d'ouverture du tiroir (37) ;
acquérir (S303) l'image de l'intérieur du tiroir (37) dans l'état ouvert en utilisant la caméra (220) ;
traiter (S305) l'image acquise ; et
en réponse à la reconnaissance (S307) du motif préétabli dans l'image acquise en résultat dudit traitement de l'image acquise, suivre à la trace (S311) un déplacement du motif reconnu.

3. Procédé selon la revendication 2, dans lequel le suivi à la trace d'un mouvement du motif reconnu comprend les opérations consistant à :
détecter la terminaison (S501) de l'opération d'ouverture du tiroir (37) en utilisant le motif reconnu ; et
détecter (S503) le démarrage de l'opération de fermeture du tiroir (37) en utilisant le motif.

4. Procédé selon la revendication 2 ou 3, comprenant en outre l'opération consistant à afficher (S309) une indication d'une défaillance à reconnaître un motif quand le motif préétabli n'est pas reconnu dans l'image acquise en résultat du traitement.

5. Procédé selon l'une quelconque des revendications 2 à 4, comprenant en outre les opérations consistant à
déterminer (S703) si l'image finale a été acquise avec succès sur la base de la reconnaissance du motif lorsque la terminaison de l'opération de fermeture est détectée ; et
afficher (S705) une indication d'une défaillance à reconnaître un motif lorsqu'il est déterminé que l'image finale n'a pas été acquise avec succès et que la reconnaissance de motif a été défaillante.

6. Procédé selon l'une quelconque des revendications 2 à 5, dans lequel le motif préétabli comprend une forme qui se répète une pluralité de fois, dans au moins deux couleurs différentes.

7. Procédé selon l'une quelconque des revendications 1 à 6, comprenant en outre l'opération consistant à stocker (S903) l'image finale acquise.

8. Procédé selon la revendication 7, comprenant en outre les opérations consistant à :
recevoir (S905) un ordre pour afficher l'image finale ; et
récupérer l'image finale stockée et ensuite afficher (S907) l'image finale récupérée.

9. Procédé selon l'une quelconque des revendications 1 à 8, comprenant en outre les opérations consistant à :
recevoir (S1105, S1305, S1307) un ordre de requête d'image depuis un terminal externe (2) ; et
transmettre (S1103, S1309) l'image finale au terminal externe (2) en réponse à l'ordre de requête d'image (S1105, S1305, S1307).

10. Procédé selon l'une quelconque des revendications 1 à 8, comprenant en outre les opérations consistant à :
recevoir (S1507, S1707) un ordre de requête d'image depuis un serveur externe (3) ;
transmettre (S1509, S1709) l'image finale au serveur externe (3) en réponse à l'ordre de requête d'image ; et
recevoir (S1513, S1713) au moins un service en relation depuis le serveur externe (3) sur la base d'une analyse (S1511, S1711) de l'image finale par le serveur externe (3).

11. Procédé selon la revendication 10, dans lequel ledit au moins un service en relation (S1513, S1713) comprend au moins un service parmi une liste d'articles de reremplissage à stocker dans le réfrigérateur (1) ou des informations en relation avec des recettes de cuisson utilisant les articles actuellement stockés dans le réfrigérateur (1).

12. Réfrigérateur (1) comprenant :
un corps principal (10) ;
un tiroir (37) couplé de façon déplaçable au corps principal (10) de manière à être inséré dans le et à être extrait hors du corps principal (10) ;
un dispositif de photographie (220) configuré pour acquérir une image interne du tiroir (37) ; et
un contrôleur (260) configuré pour commander le dispositif de photographie (220) pour acquérir une image finale du tiroir (37) en coïncidence avec un instant auquel l'opération de fermeture du tiroir (37) est commencée quand l'opération de fermeture du tiroir (37) est détectée,
**caractérisé en ce que** le contrôleur (260) est configuré pour reconnaître sur une image acquise un motif précédemment formé sur le tiroir (37) pour détecter un déplacement du tiroir (37).

13. Réfrigérateur selon la revendication 12, dans lequel le contrôleur (260) est configuré pour acquérir l'image interne du tiroir (37) en utilisant le dispositif de photographie (220), pour traiter l'image acquise, et pour reconnaître le motif préétabli depuis l'image acquise de manière à suivre à la trace un déplacement du motif reconnu.

14. Réfrigérateur selon la revendication 13, dans lequel le contrôleur (260) est configuré pour détecter le commencement et la terminaison de l'opération de fermeture du tiroir (37) en utilisant le motif reconnu.

15. Réfrigérateur selon les revendications 13 ou 14, dans lequel le motif préétabli comprend une forme qui se répète une pluralité de fois, dans au moins deux couleurs différentes.

16. Réfrigérateur selon l'une quelconque des revendications 12 à 15, comprenant en outre un dispositif de stockage (230) configuré pour stocker l'image finale.

17. Réfrigérateur selon l'une quelconque des revendications 12 à 16, comprenant en outre un affichage (250) configuré pour afficher l'image finale quand la reconnaissance de motif a eu lieu avec succès, et pour afficher une indication d'une défaillance à reconnaître un motif quand la reconnaissance de motif n'a pas eu lieu avec succès.

18. Réfrigérateur selon la revendication 17, comprenant en outre un dispositif d'entrée (240) configuré pour recevoir une entrée externe pour afficher l'image finale, dans lequel le contrôleur (260) est configuré pour commander l'affichage (250) afin d'afficher l'image finale quand l'entrée externe pour afficher l'image finale est reçue au niveau du dispositif d'entrée (240).

19. Réfrigérateur selon l'une quelconque des revendications 12 à 18, comprenant en outre un dispositif de communication (270) configuré pour recevoir une requête d'image depuis un terminal externe (2) ou un serveur (3), et pour transmettre l'image finale au terminal externe (2) ou au serveur (3) en réponse à la requête reçue, le dispositif de communication (270) recevant des informations en relation avec des services depuis le serveur externe (3) sur la base d'une analyse de l'image finale transmise,
dans lequel le contrôleur (260) est configuré pour commander le dispositif de communication (270) pour transmettre l'image finale au terminal externe (2) ou au serveur (3) en réponse à la requête d'image depuis le terminal externe (2) ou le serveur (3).
